# EUROPEAN PATENT APPLICATION

(11) **EP 3 459 715 A1**
(43) Date of publication of application: **27.03.2019**
(21) Application number: 17193161.1
(22) Date of filing: 26.09.2017
(51) Int. Cl.: B29C 64/393, B33Y 50/02, G05B 13/02, B22F 3/105

(54) **METHOD AND APPARATUS FOR PREDICTING THE OCCURRENCE AND TYPE OF DEFECTS IN AN ADDITIVE MANUFACTURING PROCESS**

(71) Applicant: Siemens Aktiengesellschaft, 80333 München (DE)
(72) Inventor: Balanica, Victor, 85049 Ingolstadt (DE); Buggenthin, Felix, 81373 München (DE); Caelers, Michael, 602 47 Norrköping (SE); Düll, Siegmund, 80336 München (DE); Eriksson, Jonas, 61294 Finspong (SE); Fornander, Jerry, 61232 Finspang (SE); Graichen, Andreas, 60214 Norrköping (SE); Joblin, Mitchell, 81549 München (DE); Otte, Clemens, 81739 München (DE); Reitinger, Axel, 81377 München (DE); Sidenvall, Vincent, 612 37 Finspang (SE)

(57) **Abstract**

A method and an apparatus (100), comprising of a data capture unit (200), a training unit (101), an application unit (102), and an analysis unit (103), for predicting defects (F) in an additive manufacturing process, wherein:
- training data and production data, comprising of information on individual layers (L₁,...,Lₙ) of the additive manufacturing process, are provided,
- a classifying function (C) is trained by means of a machine learning technique and the training data (1) to identify pre-warning indicators (W) of defects in printed layers,
- the classifying function is applied to production data (2) of the additive manufacturing process,
- the classifying function predicts defects (F) in the present or at least one of the subsequent layers.

## Description

This application relates to a method and an apparatus for predicting defects in an additive manufacturing process.

Additive manufacturing is a production process wherein three-dimensional (3D) objects are produced by adding and fusing layers of material on top of each other, in contrast to common mechanical production like for example milling. The process is generally also called "3D-printing".

The production is based on digital 3D-models of the physical objects and is therefore computer-controlled. This so called computer-aided design, short CAD, is vector-based, since all 3D-objects can be characterized by using lines and points. The digital 3D model, which is saved in a CAD-file, is converted into thin slices. The slice data are sent to the printer, which prints slice by slice on top of each other and thus constructs the 3D object.

The production material, e.g., metal or plastic, is usually provided in powder form. For each object layer powder is spread over the previous layer using a recoater blade. The thin layer of material powder is melted and fused by a laser and subsequently cured. Hence the process of 3D printing involves the following steps: spreading the material powder, melting and fusing, and curing. Therefore one also calls this process laser powder bed fusion.

The recoating and fusion process can be affected by several problems. Among other things, errors can occur during the process of spreading the powder, for example powder spread issues through uneven coating, or during the melting process, for example over-heating of sub-areas. Such errors can severely affect the quality of the printed part and also subsequent layers unless they are detected. If they are not detected the resulting defects in the affected layers may require scrapping the whole part afterwards. Furthermore, recoater crashes can occur when the recoater blade hits the melted material of the previous layer, damaging the part that has been printed and/or the recoater blade itself. Depending on the type of the defect, the printed object is unusable and the printing needs to be repeated.

Conventional methods to solve problems occurring during the additive manufacturing process involve recording the printing area using a sensor. In particular one uses cameras to take pictures of the powder bed after recoating and to detect predefined anomalies in the pictures, e.g., bright pixels indicating powder spread issues. Beyond that, acoustical or vibration sensors on the recoater blade are used to detect for example recoater crashes. Further sensors monitor the melting process and can detect overheated spots. Nevertheless all these methods are tuned to detect specific, predefined issues and defects.

The document WO 2015/020939 A1 discloses a method and a system to automatically control an additive manufacturing process, comprising computer vision algorithms and machine learning algorithms to detect errors. The 3D printing process is monitored by a camera to check if an error has occurred. The system automatically indentifies and corrects system errors, which lead to inaccuracies, or stops the process when an error has occurred.

Common methods and techniques are able to detect errors using machine learning algorithms. However, the detection of an error is not fully guaranteed. Often, defects occur depending on preceding, marginal anomalies or through other dependencies of the printing process. The said state of the art does not describe the analysis of multiple, sequential layers. Hence, the detection of a marginal error that can cause a severe defect in one of the subsequent printing steps is not feasible. The same holds for detecting such dependencies. A respective adaptive system would further make no changes or corrections to such marginal errors.

The 3D-printing process is a lengthy and costly process. It is the object of the present application to propose a method allowing early error recognition in a subsequent layer and estimation of the quality of the printing product of an additive manufacturing process.

The object is solved by the features of the independent claims. The dependent claims contain further developments of the invention.

The disclosed invention describes a method for predicting the occurrence and the type of defects in an additive manufacturing process, whereby a three-dimensional object is constructed by printing multiple layers of material on top of each other, comprising:
- providing training data and production data comprising of information of individual printed layers,
- training of at least one classifying function to identify pre-warning indicators and/or errors in a layer and thereby to predict the occurrence and type of defects in a subsequent layer, by means of machine learning techniques and by means of the training data, whereby pre-warning indicators and/or errors are used in preceding layers of a present layer wherein a defect and the type of the defect are identified,
- applying the at least one classifying function to the production data of the additive manufacturing process, and
- predicting a defect and a type of the defect in at least one of the subsequent layers of the production data.

The said method uses at least one classifying function or classifier to identify pre-warning indicators or errors in the 3D printing process with the aim to predict the occurrence of more defects at a later printing stage. In the following, the word 'defect' is used for severe issues in the printing process, while 'errors' are minor issues, which usually cause major failures in the following printing process but are no major defects themselves.

Training and production data are provided by a data capture unit. Both data sets are taken from the same 3D printing process that means both comprise information on individual printed layers. Training data differ from production data; defects in the training data have already been identified while production data have not been analyzed yet.

The disclosed method has the advantage that errors can be identified and therefore reduced early on, enhancing the efficiency of the production process. Production and material costs as well as time are saved, because misprints can be rejected at an early stage.

The classifying function identifies the pre-warning indicators, errors and/or defects in a layer. A sensor collects information on the layer and the object. This information is stored in a multi-dimensional feature vector. Entries of the feature vector comprise for example characteristics of the printed object and particular features of a defect, like severity or type. The classifying function is applied to a feature vector.

The training of at least one classifying function by means of machine learning techniques is performed by using training data of the 3D printing process. One uses training data of preceding printing layers of defective layers. The classifying function is hence trained on the basis of pre-warning indicators and/or errors in these preceding layers. This procedure assures that the classifying function automatically identifies conspicuous features which are related to the occurrence of the defect. It is further trained to recognize relations between defects and pre-warning indicators. Therefore it is guaranteed that severe defects, which would render the object unusable, are detected well in advance.

After the training of the classifying function, it is applied to production data of the additive manufacturing process. In this step, the classifying function is applied to a feature vector of a layer of the production data set. The training guarantees that common as well as rare defects and their precursors are then known by the classifying function. When applied to real printing data, the classifier detects resembling pre-warning indicators and predicts on their basis the occurrence of a resulting defect in at least one of the subsequent layers.

Compared to cited state of the art the disclosed method advantageously offers to not only detect but also predict defects in the subsequent steps of the 3D printing process. Therefore, defects in the printing process can be further reduced.

According to a further preferred embodiment of the method, a defect and a type of the defect in at least one of the layers of the training data are identified by a machine learning technique.

In order to train at least one classifying function to identify pre-warning indicators in preceding layers, the knowledge in which layer a defect has occurred is required. In the training dataset, which is used for training the classifying function according to the invention, the defective layers need to be known and labeled. Advantageously this labeling is performed in advance by a machine learning technique. The approach is the following: training data including data of accurate and error-free as well as defective printing layers are used. Defects in the data are identified and the data are manually labeled. Further labeling can be iteratively performed in an automated process, for example by a machine learning technique. Based on the output data of this automated identification of defective layers, the classifying function is trained to detect pre-warning indicators in preceding layers.

According to a further preferred embodiment of the method, defects in the present layer are predicted.

The classifying function is trained to recognize pre-warning indicators and/or errors in order to predict a defect in at least one of the subsequent layers. Furthermore, the application of the classifying function to the production data enables the prediction of defects also in the present layer. For example, if during the printing process an error occurs which could cause a severe problem in the same layer, the classifying function can predict such event. Thus, the disclosed method enables a fast reaction to accidents in the 3D printing process.

According to a further preferred embodiment of the method, the classifying function allocates a probability value of the likelihood of the occurrence of a defect in the present layer and/or in at least one of the subsequent layers.

During the training of the classifying function using a machine learning technique statistics of the defects are determined, e.g., the frequency of a particular type of defect. When the classifying function is applied to the production data, a probability value of the likelihood of the occurrence of a defect is provided. Hence, the statistics are based on and biased by the input training data. In other words, the training data are selected to be a representative dataset for the process, which will be monitored. Such setup is favorable for tuning the classifying function depending on a particular 3D printer with specific issues. In such case one uses training data from that particular printer. Furthermore, if a more general error detection method for multiple printers of the same type is preferred, one uses a composite of training data from all printers to train a classifying function.

According to a further preferred embodiment of the method, the occurrence of a defect in the present layer and/or in at least one of the subsequent layers is predicted using the probability value.

Based on the acquired probability value, the occurrence of a defect in the present and/or subsequent layers can be predicted. In case of a common error the likelihood for occurrence is higher than for unusual errors. Hence, the process of detecting and predicting errors delivers a more precise estimate about the occurrence of a defect than a simple yes/no-statement. This approach allows the early recognition of errors and defects, such that the production process can be interrupted and less material is wasted.

According to a further preferred embodiment the method comprises predicting a quality of the present layer or at least one of the subsequent layers based on the probability value.

Besides the prediction of defects in subsequent layers, the method allows the prediction and/or determination of a quality of a printing layer. For example, the classifying function can be used to predict the quality or accuracy of the subsequent layer.

According to a further preferred embodiment, the training data and production data comprise image data, video data, data from a manufacturing execution system, sensor data, slice data, computer-aided design data, and/or time series data.

Using training and production data with different information content, one favorably achieves more efficient detection of errors. By means of image recognition software, uneven spreading of the powder can be identified in pictures. Time series data comprise time-dependent information, for example on vibrations, laser power, and/or further physical quantities and/or information on the printing environment. Furthermore, data from CAD models are used to improve the precision of a classifying function, by directly comparing the model data with the real data.

Based on the requirements, one can train either one classifying function using all training data from different sensors, or train multiple classifying functions, each specialized for and acting on different input training data.

According to a further preferred embodiment, the method comprises determining a positional information of a defect in a layer and/or the position of the defect is incorporated into the calculation of the probability value.

A positional information can comprise the three-dimensional location and orientation of a defect. Furthermore, the severity of an error can be evaluated based on the positional information. For example, an error which occurs at the edge of an object might have less effect on the subsequent printing steps and thus the likelihood for occurrence of a defect is smaller.

According to a further preferred embodiment, the machine learning techniques comprise random forests, neural networks, support vector machines, logistic regression, Markov models, or Gaussian process classification.

Machine learning favorably provides a fast approach to automatically make selections. The classifying function is trained by means of machine learning techniques such that the method can be easily adapted to other training datasets.

According to a further preferred embodiment an alert signal is triggered, if the probability value exceeds a predefined threshold value.

This procedure step guarantees fast and efficient response to defects or incidents during the printing process. The alert signal can already be triggered as soon as the classifying function detects a pre-warning indicator with a high probability for leading to a severe defect.

According to a further preferred embodiment, the method comprises taking action if the alert signal is triggered.

A response to the triggered alert signal comprise, e.g., interruption of the production process, fast sorting of defective objects, or adjustment of the production parameter. An early response to the detection or prediction of a defect enables a reduction of machine downtime, waste of material and costs.

According to a further preferred embodiment, the method is applied to a powder bed fusion process.

In the powder bed fusion process, in particular Selective Laser Melting, short SLM, errors which are not independent of each other but are due to different causes can occur. For example, uneven spreading of powder in one production step can cause too thick and therefore poorly welded parts. Such defects lead to unusable objects and the printing needs to be repeated. The described method enables the reduction of defects through prediction.

The invention comprises an apparatus for predicting the occurrence and the type of defects in an additive manufacturing process, whereby a three-dimensional object is constructed by printing multiple layers of material on top of each other, comprising of:
- at least one data capture unit taking and delivering training data and production data comprising of information on individual layers,
- a training unit wherein at least one classifying function is trained to identify pre-warning indicators and/or errors in a layer and thereby to predict the occurrence and type of defects in a subsequent layer, by means of machine learning techniques and by means of the training data, whereby pre-warning indicators and/or errors are used in preceding layers of a present layer wherein a defect and the type of the defect are identified,
- a application unit for applying the at least one classifying function to the production data of the additive manufacturing process
   and
- an analysis unit predicting a defect and a type of the defect in at least one of the subsequent layers of the production data.

The advantages of the described apparatus, comprising means for carrying out the inventive method, are equivalent to the said advantages of the method.

In a favorable way, the data capture unit is at least one camera or at least one sensor which is connected to a computer. The data and information of the defects is taken and delivered as training data or production data.

According to a further preferred embodiment, the apparatus further comprises a quality control unit for predicting a quality of the present layer or at least one of the subsequent layers based on the probability value.

The advantages of the described apparatus, comprising means for carrying out the method to predict a quality of a printing layer, are equivalent to the said advantages of the method.

The apparatus for predicting the occurrence and the type of defects in an additive manufacturing process is computer-based, hence, comprises at least one processor which carries out the said process steps.

According to another aspect of the invention, this object is solved by a computer program product, loadable into internal memory, comprising software code for performing the steps of the method.

The inventive method and apparatus are applicable to different types of 3D printing processes and therefore not restricted to the said example of the powder bed fusion.
The invention will be explained in more detail by reference to the accompanying figures.
- Fig.1: flow chart illustrating a first embodiment the inventive method for predicting the occurrence and the type of defects in an additive manufacturing process;
- Fig. 2: flow chart illustrating a second embodiment the inventive method for predicting the occurrence and the type of defects in an additive manufacturing process and triggering an alert signal;
- Fig. 3: diagram showing the training in the training unit of a classifying function;
- Fig. 4: block diagram showing an embodiment of the inventive apparatus for predicting the occurrence and the type of defects in an additive manufacturing process.

Equivalent parts in the different figures are labeled with the same reference signs.

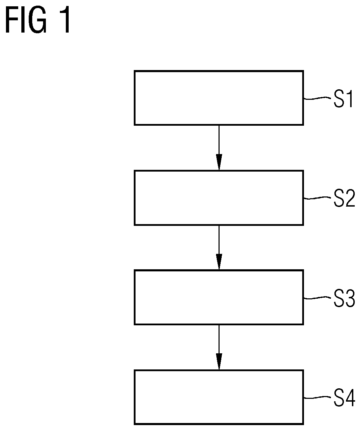

By means of the flow chart of Figure 1 the inventive solution to predict the occurrence and the type of defects in an additive manufacturing process is shown. In the first step S1, the data of the manufacturing process are provided by a sensor. The data are either training data or production data and comprise information about individual layers of material. The data sets are the starting point for the analysis and training.

The training data further comprise information on defects in layers, which have been previously identified by machine learning techniques. This information serves as input for the training of the classifying function.

In the next step S2, the classifying function is trained by means of machine learning techniques to identify pre-warning indicators and/or errors in a layer and thus predict the occurrence and type of severe defects in a subsequent layer. The training is performed as follows: the training data is already labeled, that means the information about defective and non-defective layers is included. The training of the classifying function is based on defective layers plus their preceding layers. Using for example computer vision software, conspicuous features in the preceding layers are identified and labeled as pre-warning indicators and/or errors which cause defects later on. The classifying function is hence trained to identify these features.

In the next step S3, the classifying function is applied to a production data set that means a data set which has not been labeled yet such that the occurrence of defects is unknown. Based on the learned method, the classifying function identifies pre-warning indicators, allocates a probability value to them and, in step S4, predicts the occurrence of a defect in at least one of the subsequent layers.

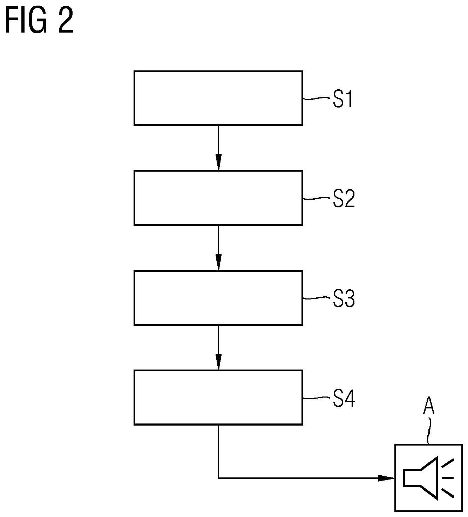

Figure 2 shows an extended flow chart of the inventive method whereby steps S1 to S3 are performed in the same way as described for Figure 1. After the last step S4 an alert signal A is triggered if the probability value calculated for an event exceeds a predefined threshold value.

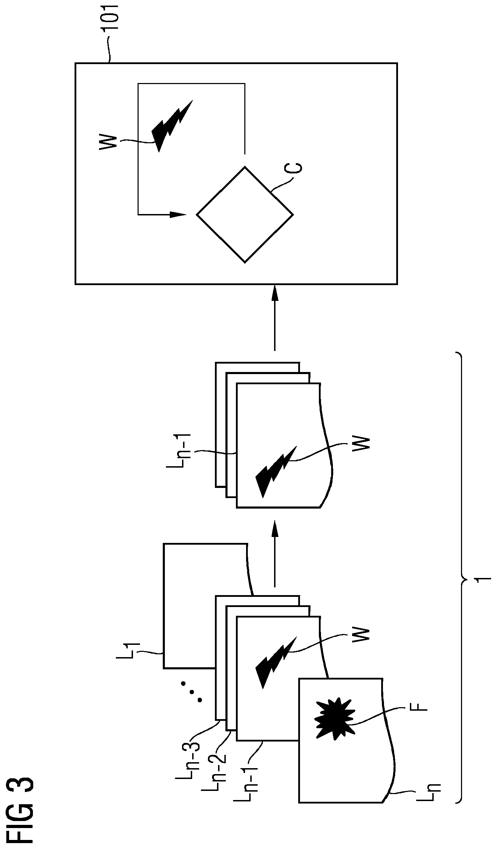

Figure 3 shows the training procedure of a classifying function C using a machine learning technique. As described above the training data 1 comprise information of labeled layers L₁,...,Lₙ with defects F as well as the according preceding layers Lₙ₋₁, Lₙ₋₂, Lₙ₋₃,.... Training data 1 comprise image data, video data, data from a manufacturing execution system, sensor data, slice data, computer-aided design data, and/or time series data of the layers. This data contains information about the characteristics of the layers and the 3D printing process, as for example anomalies in the powder coating. In case of image data, the camera captures characteristics of the printed objected as well as anomalies in the printing process. In case of time series data, sensors for example monitor vibrations or acceleration of the recoater blade to control the recoating behavior. This taken information is stored in a feature vector.

The labeling of defective and non-defective training data is performed in advance (not displayed), favorably by a machine learning technique. The output of the labeling is the basis for the training of the classifying function.

The classifying function C is trained to detect pre-warning indicators W in the preceding layers. For this purpose, the training comprises searching for similarities and common features in preceding layers of defective layers with the same defect. In the training unit 101 at least one classifying function C is trained. Furthermore, the statistics of the training data set is built up in order to allocate a probability value later on. The classifying function C further learns to detect dependencies between defects F and preceding errors W. From these dependencies the likelihood of the occurrence of a particular defect F can be determined. The training procedure is an iterative process in order to enhance the functionality and the success rate of the classifying function C.

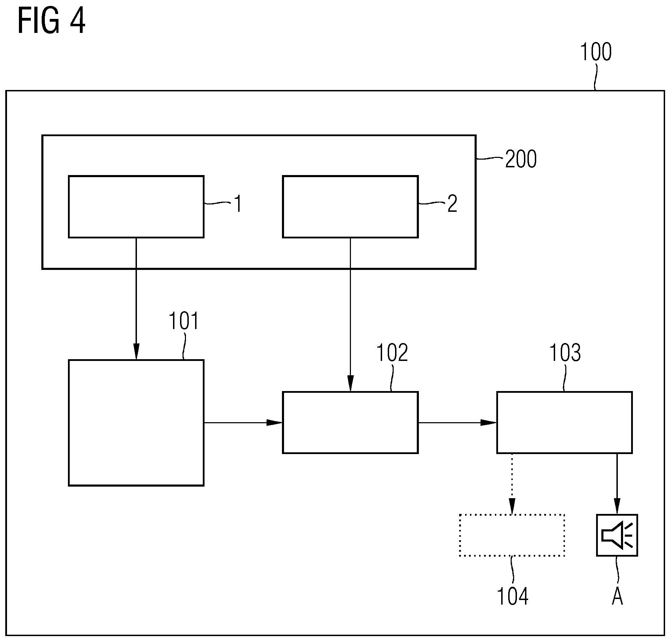

The apparatus 100 according to the invention is shown in the block diagram in Figure 4, comprising of a data capture unit 200, a training unit 101, an application unit 102, and an analysis unit 103. The data capture unit 200 provides the training data 1 and/or the production data 2. The data capture unit 101 can be for example a camera taking pictures of the powder bed, which is connected to a computer for automatically processing the images. The training data 1 is transferred to the training unit 101, wherein the classifying function C is trained as described in Figure 3. In the application unit 102, the at least one classifying function C is applied to the production data 2. The resulting output of the application is transferred to the analysis unit 103 wherein a defect F and a type of the defect in at least one of the subsequent layers is predicted by means of the probability value. If the probability value exceeds a predefined threshold, an alert signal A is triggered. In a favorable embodiment, the apparatus optionally comprises a quality control unit 104 for determining and/or predicting a quality of the present layer or at least one of the subsequent layers based on the probability value.

All methods and method steps can be implemented by corresponding means which are adapted for performing the respective method steps. All functions provided by particular means can be a method step of the method.

The scope of protection is given by the claims and not restricted by features discussed and the description as shown in the figures.

The invention is not limited to the described examples. The invention also comprises all combinations of any of the described or depicted features.

## Claims

1. Method for predicting the occurrence and the type of defects (F) in an additive manufacturing process, whereby a three-dimensional object is constructed by printing multiple layers (L₁,...,Lₙ) of material on top of each other, comprising:
- providing (S1) training data (1) and production data (2) comprising of information on individual printed layers (L₁,...,Lₙ),
- training (S2) of at least one classifying function (C) to identify pre-warning indicators and/or errors (W) in a layer and thereby to predict the occurrence and type of defects in a subsequent layer, by means of machine learning techniques and by means of the training data (1), whereby pre-warning indicators and/or errors (W) are used in preceding layers of a present layer wherein a defect (F) and the type of the defect are identified,
- applying (S3) the at least one classifying function (C) to the production data (2) of the additive manufacturing process,
and
- predicting (S4) a defect (F) and a type of the defect in at least one of the subsequent layers of the production data (2).

2. Method according to claim 1 wherein a defect (F) and a type of the defect in at least one of the layers (L₁,...,Lₙ) of the training data (1) are identified by a machine learning technique.

3. Method according to one of the preceding claims, whereby defects in the present layer (Lₙ) are predicted.

4. Method according to one of the preceding claims, whereby the classifying function (C) allocates a probability value of the likelihood of the occurrence of a defect (F) in the present layer and/or in at least one of the subsequent layers.

5. Method according to one of the preceding claims, whereby the occurrence of a defect (F) in the present layer and/or in at least one of the subsequent layers is predicted using the probability value.

6. Method according to one of the preceding claims, comprising predicting a quality of the present layer or at least one of the subsequent layers based on the probability value.

7. Method according to one of the preceding claims, wherein the training data (1) and the production data (2) comprise image data, video data, data from a manufacturing execution system, sensor data, slice data, computer-aided design data, and/or time series data.

8. Method according to one of the preceding claims, comprising determining a positional information of a defect (F) in a layer and/or the position of the defect is incorporated into the calculation of the probability value.

9. Method according to one of the preceding claims, wherein the machine learning techniques comprise random forests, neural networks, support vector machines, logistic regression, Markov models, or Gaussian process classification.

10. Method according to one of the preceding claims, whereby an alert signal (A) is triggered, if the probability value exceeds a predefined threshold value.

11. Method according to claim 10, comprising taking action if the alert signal (A) is triggered.

12. Method according to claims 1 to 11 applied to a powder bed fusion process.

13. Apparatus (100) for predicting the occurrence and the type of defects in an additive manufacturing process, whereby a three-dimensional object is constructed by printing multiple layers (L₁,...,Lₙ) of material on top of each other, comprising of:
- at least one data capture unit (200) for providing training data (1) and production data (2) comprising of information on individual printed layers (L₁,...,Lₙ),
- a training unit (101) wherein at least one classifying function (C) is trained to identify pre-warning indicators and/or errors (W) in a layer and thereby to predict the occurrence and type of defects in a subsequent layer, by means of machine learning techniques and by means of the training data (1), whereby pre-warning indicators and/or errors (W) are used in preceding layers of a present layer wherein a defect (F) and the type of the defect are identified,
- an application unit (102) for applying the at least one classification function (C) to the production data of the additive manufacturing process
and
- an analysis unit (103) predicting (S4) a defect (F) and a type of the defect in at least one of the subsequent layers of the production data (2).

14. Apparatus according to claim 13 further comprising a quality control unit (104) for predicting a quality of the present layer or at least one of the subsequent layers based on the probability value.

15. Apparatus according to the claims 13 and 14, comprising means for carrying out the method according to the claims 1 to 11.

16. A computer program product directly loadable into the internal memory of a digital computer, comprising software code portions for performing the steps of one of the claims 1 to 11 when said product is run on a computer.

17. A computer readable memory according to claim 16.
